# EUROPÄISCHE PATENTSCHRIFT

(11) **EP 1 046 026 B1**
(45) Veröffentlichungstag und Bekanntmachung des Hinweises auf die Patenterteilung: **07.12.2005**
(21) Anmeldenummer: 99950471.5
(22) Anmeldetag: 30.07.1999
(51) Int. Cl.: G01M 15/00, G01L 23/22

(54) **VERFAHREN UND VORRICHTUNG ZUR BEWERTUNG VON VERBRENNUNGSVORGÄNGEN AN EINER BRENNKRAFTMASCHINE**
METHOD AND ARRANGEMENT FOR EVALUATING COMBUSTION PROCESSES IN AN INTERNAL COMBUSTION ENGINE
PROCEDE ET DISPOSITIF D'EVALUATION DES PROCESSUS DE COMBUSTION D'UN MOTEUR A COMBUSTION INTERNE

(30) Priorität: 01.10.1998 DE 19845232
(43) Veröffentlichungstag der Anmeldung: 25.10.2000
(73) Patentinhaber: ROBERT BOSCH GMBH, 70442 Stuttgart (DE)
(72) Erfinder: RAICHLE, Franz, D-70825 Korntal-Münchingen (DE); FÖRSTER, Jürgen, D-74379 Ingersheim (DE); BÖHME, Johann, D-85455 Witten (DE); WAGNER, Michael, D-45879 Gelsenkirchen (DE)
(86) Internationale Anmeldenummer: PCT/DE1999/002348
(87) Internationale Veröffentlichungsnummer: WO 2000/020833

(56) Entgegenhaltungen:
- DE-A- 3 505 210
- US-A- 5 400 648

## Beschreibung

Zur Bewertung von Verbrennungsvorgängen existieren verschiedene Verfahren.

Eine Vielzahl motorischer Kenngrößen und Zustände, z.B. aktuelle Last, Aussetzer, Verbrennungslage usw., läßt sich auf der Basis von Brennraumdruckaufnehmern erfassen. Diese Methode erfordert pro Zylinder eine zusätzliche Bohrung im Zylinderkopf sowie einen serientauglichen Druckaufnehmer. Diese Nachteile sowie die hohen Systemkosten verhindern gegenwärtig einen Serieneinsatz.

Für die Erkennung von Verbrennungsaussetzern wird gegenwärtig das Laufunruheverfahren angewendet. Bei hochzylindrigen Motoren ist der Störabstand bei kleinen Lasten problematisch.

Insgesamt zeigt sich, daß bei Fehlen des Brennraumdrucksignals eine Vielzahl weiterer Sensoren und Verfahren zur Anwendung kommt, um einzelne verbrennungstechnische Parameter und Zustände zu ermitteln.

Aus der Literatur ist bekannt, daß sich die Druckinformation auf komplizierte Weise in den Körperschall überträgt. Es sind keine Verfahren bekannt, welche eine vollständige Rekonstruktion des Drucksignals aus dem Körperschall unter praxisrelevanten Bedingungen ermöglichen.

Aus der DE 35 05 210 A1 ist eine Messeinrichtung zur Bestimmung des zeitlichen Druckverlaufs in Zylindern von Verbrennungskraftmaschinen bekannt. Dazu wird auf jedem der Zylinder ein Beschleunigungsaufnehmer angebracht. Das Signal wird dann in der Auswerteeinrichtung mittels eines mit elektronischen Mitteln realisierten Modells der Elastizitäten, Dämpfungen und Massen zur Bestimmung des zeitlichen Druckverlaufs im Zylinder benutzt.

In DE 39 33 008 C2 kommt für die Aussetzererkennung ein Verfahren zur Anwendung, in dem durch Tiefpassfilterung der Motorschwingungen die Nockenwellenfrequenz herausgefiltert und der Pegel mit einem Referenzpegel verglichen wird. Diese Methode ermöglicht die Erkennung von Aussetzern nur an einem Zylinder. Bei Mehrfachaussetzern ist keine Zylinderidentifikation möglich. Des weiteren werden die Eigenschaften der Übertragungsfunktion nicht berücksichtigt. Es gibt keine Möglichkeit, den Einfluss verschiedener Zylinder auf das Ausgangssignal zu trennen.

In DE 196 12 180 C1 wird ein Verfahren zur Erkennung von irregulären Verbrennungsgeräuschen an einer mehrzylindrigen Diesel-Brennkraftmaschine vorgestellt. Dabei wird das mittels Körperschallaufnehmern erfasste Verbrennungsgeräusch zur Merkmalsgewinnung verwendet. Es ist anzunehmen, dass auch höher frequente Signalanteile Verwendung finden. Dieses Verfahren ist bei Ottomotoren nicht anwendbar, da sich die von normalen Verbrennungen im Körperschall erzeugten höher frequenten Signale kaum von Störgeräuschen unterscheiden.

In EP 0 326 898 B1 wird ein Verfahren zur Bestimmung von fehlerhaften Verbrennungen aus dem bekannten Prinzip der Klopferkennung aus Körperschall abgeleitet. Dazu wird das Körperschallsignal in einem zusätzlichen Meßfenster zwischen Zündzeitpunkt und dem eigentlichen Klopffenster im Leerlauf ausgewertet. Über den Frequenzbereich, der die Detektion fehlerhafter Verbrennungen zuläßt, werden keine Angaben gemacht.

Aus der DE 197 39 085 ist eine Steuerung und Regelung der Verbrennung im Brennraum einer Brennkraftmaschine bekannt, die auf der Rekonstruktion des Brennraumdruckverlaufes aus Signalen von Klopfsensoren basiert.

In EP 0 517 774 B1 werden ein Verfahren und eine Vorrichtung zur Ermittlung des Verlaufs des Innendrucks eines Zylinders einer Kolbenmaschine vorgestellt. Dabei wird zunächst eine Übertragungsstrecke vom Körperschall in den Zylinderinnendruck identifiziert. Im folgenden erfolgt die Berechnung des Zylinderdrucks durch Anwendung der zuvor identifizierten Übertragungsstrecke auf das gemessene Körperschallsignal. Es werden hierbei mittels Torschaltungen lediglich Signalausschnitte des Drucksignales rekonstruiert, die Auswertung des Innendruckverlaufs über das gesamte Arbeitsspiel ist nicht vorgesehen. Innerhalb des durch die Torschaltung vorgegebenen Signalfensters ist die Übertragungsfunktion nicht zeit- oder kurbelwinkelabhängig.

Die Beschränkung auf bestimmte Signalausschnitte wird in der EP 517 774 mit der Ausblendung von Störanteilen begründet. Diese Beschränkung führt aber über diese Ausblendung hinaus zum Verlust nützlicher Informationen. Da sich die Drucksignale aller Zylinder in einem Kurbelwellenwinkelbereich von 720 °KW beim Viertaktmotor abbilden, findet mit steigender Zylinderzahl eine zunehmende Überlagerung der Drucksignale verschiedener Zylinder statt. Entsprechend schmaler werden die Signalfenster, in denen das Signal eines Zylinders von Einkopplungen anderer Zylinder unbeeinflußt bleibt.

Die Anwendung dieses Verfahrens zur Erfassung aller aus dem Zylinderinnendruck extrahierbaren Merkmale ist für mehrzylindrige Motoren daher nicht möglich.

Die Aufgabe der Erfindung besteht in der Entwicklung eines Verfahrens und einer Anordnung, welche nur die verbrennungsrelevanten Parameter und Zustände aus dem Körperschallsignal extrahiert.

Beispiele verbrennungsrelevanter Parameter sind das Integral der Verbrennungsüberhöhung im Drucksignal, das Integral des Drucksignals in der Anstiegsphase vor dem Erreichen des Maximums und die Lage des Maximums des Drucksignals. Das Drucksignal weist einen Anteil auf, der nur auf die Kompression zurückzuführen ist. Dieser Anteil würde sich bspw. ohne Zündung messen lassen. Der Druck korreliert mit dem Volumen oberhalb des Kolbens und ist daher bei großem Volumen vor dem Verdichtungstakt und am Ende des Arbeitstaktes gering und im Bereich des kleinsten Volumens im oberen Totpunkt am Ende des Verdichtungstaktes maximal.

Die Verbrennungsüberhöhung ist die Differenz zwischen den Druckverläufen, die sich mit und ohne Verbrennung einstellen. Ihr Integral ist ein Maß für den Energieumsatz der Verbrennung. Es ist insbesondere für die Erkennung von Verbrennungsaussetzern aufschlußreich. Das Druckintegral der Anstiegsphase eignet sich zur Lasterfassung, d.h. zur Erfassung der Zylinderfüllung. Die Lage des Maximums ist insbesondere für Regelzwecke interessant.

Die genannte Aufgabe wird mit den Merkmalen des Anspruchs 1 gelöst. Vorteilhafte Weiterbildungen sind Gegenstand der abhängigen Ansprüche.

Die erfindungsgemäße Lösung der Aufgabenstellung besteht darin, daß für das erfindungsgemäße Verfahren und die erfindungsgemäße Anordnung ein Modell zum Tragen kommt, welches auch für die relevanten niederfrequenten Schwingungen wie Druckerhebungskurven und Verbrennungsüberhöhungen eine zeit- bzw. Kurbelwellenwinkelvariante Übertragung zwischen Druck und Körperschall zugrunde legt. Die Zeitabhängigkeit wird durch eine winkelabhängige Übertragungsfunktion realisiert, um eine Drehzahlunabhängigkeit zu erreichen.

Die Erfindung basiert auf der Erkenntnis, daß bei der Übertragung zwischen Druck und Körperschallsignalen ein zeit- bzw. Kurbelwellenwinkel-variantes Übertragungsverhalten existiert. Diese Varianz ist durch die Kolbenbewegung während des Auftretens der Klopfschwingungen bedingt erklärbar. Die durch das Klopfen generierten Druckschwingungen erfahren ihrerseits selbst durch die Kolbenbewegung eine Frequenzmodulation.

Für die Ermittlung verbrennungsrelevanter Parameter und Zustände werden nur einzelne Bestandteile des rekonstruierbaren Drucksignals verwendet. Für die Aussetzererkennung kommt die Rekonstruktion der Verbrennungsüberhöhung im Ordnungsbereich zur Anwendung. Dabei bezeichnet der Begriff der Ordnung ganzzahlige Vielfache von Zündfrequenzen. Die Zündfrequenz eines Zylinders eines Viertaktmotors liegt bei der halben Kurbelwellendrehfrequenz n/2, d.h. bei der Nockenwellenfrequenz. Bei z Zylindern liegt die Frequenz der Zündungen des Motors entsprechend bei z*n/2.

Der Gleichanteil der Verbrennungsüberhöhung wird bspw. bei einer Fouriertransformation des Drucksignals aus dem Zeitbereich in den Frequenzbereich durch den nullten Fourierkoeffizienten repräsentiert.

Im folgenden werden Ausführungsbeispiele der Erfindung mit Bezug auf die Zeichnungen erläutert.

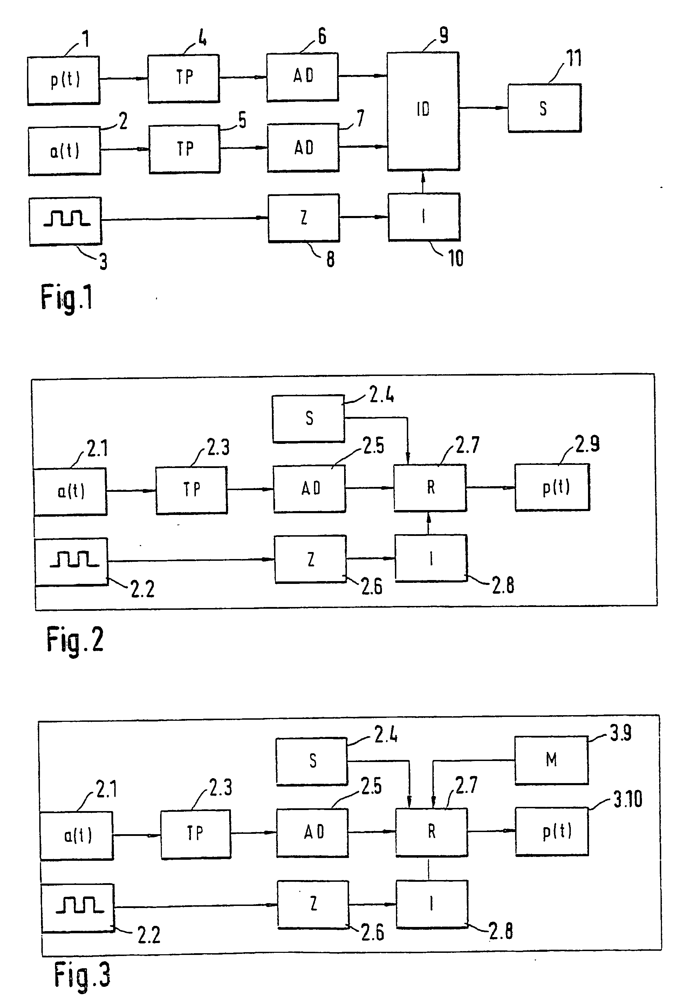

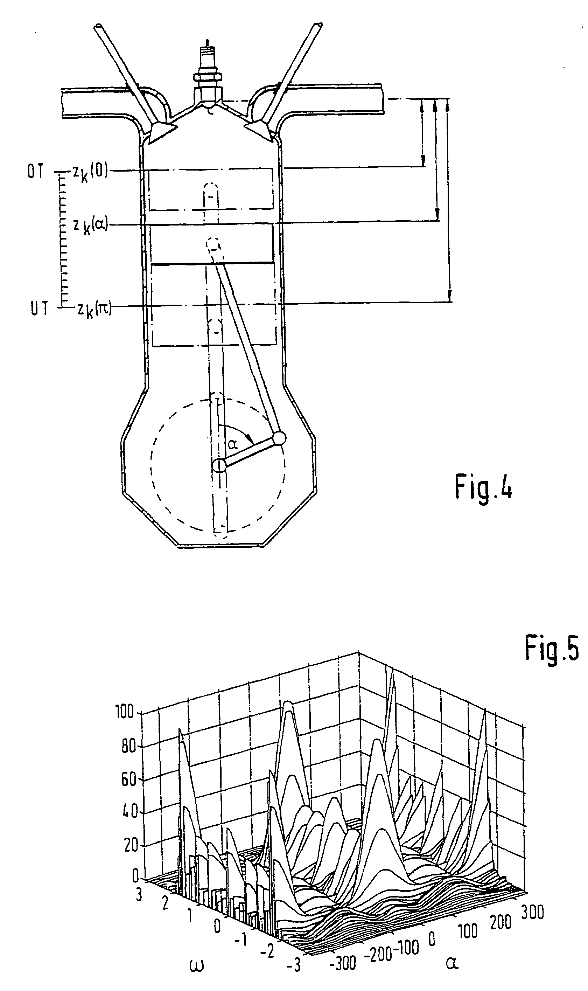

Abb. 1 zeigt eine Ausführungsform der Vorrichtung zur Bestimmung der Übertragungsfunktion. Abb. 2 zeigt eine Ausführungsform der Vorrichtung zur zylinderindividuellen Berechnung der Zylinderinnendrucksignale p(t) aus einem oder mehreren Körperschallsignalen. Abb. 3 zeigt eine abgeänderte Ausführungsform der Vorrichtung zur zylinderindividuellen Berechnung der Zylinderinnendrucksignale p(t) aus einem oder mehreren Körperschallsignalen. Abbildung 4 verdeutlicht die zeit- oder winkelabhängige Einkopplung von Körperschall in die Übertragungsstrecke. Abbildung 5 zeigt eine Schätzung des Betragsquadrates der Übertragungsfunktion in ihrer Abhängigkeit von der Frequenz bzw. Ordnung Omega und von der Zeit, bzw. dem Kurbelwellenwinkel Alpha.

In einer Applikationsphase ist zunächst einmalig die Übertragungsfunktion von allen Innendrücken p(t) zu einem oder mehreren Körperschallaufnehmern a(t) zu bestimmen. Die Zeitsignale p(t) und a(t) sind also im folgenden als vektorielle Größen anzusehen. Es kann davon ausgegangen werden, daß die berechnete Übertragungsfunktion für Kolbenmaschinen einer Baureihe Gültigkeit besitzt, so daß ihre Bestimmung lediglich für ein Individuum einer Serie durchgeführt werden muß.

Abb. 1 zeigt eine Ausführungsform der Vorrichtung zur Bestimmung der Übertragungsfunktion. Die Meßfühler 1 messen alle Zylinderinnendrucksignale p(t) der Kolbenmaschine. Nach analoger Tiefpaßfilterung mit Filter 4 werden die Drucksignale im Mittel 6 digitalisiert und stehen in dieser Form zur Weiterverarbeitung bereit. Die Körperschallsignale a(t) werden mit den Meßfühlern 2 aufgenommen und mit der Grenzfrequenz von 4 in 5 ebenfalls tiefpaßgefiltert. Um zu große Störungen im Körperschallsignal auszuschließen, ist hierbei eine Grenzfrequenz im Ordnungsbereich, bspw. 3 kHz zu wählen. Die Körperschallsignale werden ebenso mittels 7 digitalisiert. Zur Synchronisation mit der Kolbenmaschine werden Synchronisationsimpulse mit Meßfühler 3 aufgenommen. Die Anzahl der Abtasttakte zwischen den Impulsen wird mit einem Zähler 8 ermittelt. Das Interpolationsfilter 10 liefert dann zu jedem Abtastwert einen zugeordneten Kurbelwinkelwert α. Die Identifikationseinheit 9 berechnet aus den nun in digitaler Form vorliegenden Zeitsignalen die kurbelwinkelabhängigen Impulsantworten h(α,t) bzw. die Übertragungsfunktionen H(α,f) (mit f proportional Omega) aller Übertragungsstrecken von den Drucksignalen zu den Körperschallsignalen. Die Berechnung kann entweder im Zeit-oder Frequenzbereich erfolgen. Der Abhängigkeit der Übertragungsfunktionen von der Rotationsgeschwindigkeit ist in der Winkelabhängigkeit der Impulsantwort bzw. Übertragungsfunktion Rechnung getragen.

Abb. 2 zeigt eine Ausführungsform der Vorrichtung zur zylinderindividuellen Berechnung bzw. Rekonstruktion der Zylinderinnendrucksignale p(t) aus einem oder mehreren Körperschallsignalen. Es können hierbei die Innendrucksignale aller Zylinder vollständig bestimmt werden. Nach der Aufnahme der Körperschallsignale mit den Meßfühlern 2.1 werden diese mit dem Filter 2.3 tiefpaßgefiltert und im Mittel 2.5 digitalisiert, wobei die Grenzfrequenz des Tiefpasses im Ordnungsbereich liegt. Die Anzahl von Abtasttakten zwischen Synchronisationsimpulsen 2.2 werden mit dem Zähler 2.6 gezählt und es wird mittels Interpolationsfilter 2.8 zu jedem Abtastwert ein zugeordneter Kurbelwinkelwert α berechnet. In der Berechnungseinheit 2.7 werden im Sinne kleinster Fehlerquadrate optimale Drucksignale 2.9 ermittelt, die mit den im Speicher 2.4 abgelegten Impulsantworten bzw. Übertragungsfunktionen die gemessenen Körperschallsignale erzeugt haben könnten.

Abb. 3 zeigt eine abgeänderte Ausführungsform der Vorrichtung zur zylinderindividuellen Berechnung der Zylinderinnendrucksignale p(t) aus einem oder mehreren Körperschallsignalen. Die Änderung besteht in dem zusätzlichen Mittel 3.9, daß heuristisch bestimmte Musterfunktionen bereitstellt. In der Berechnungseinheit 2.7 werden im Sinne kleinster Fehlerquadrate optimale Drucksignale 3.10 ermittelt, die mit den im Speicher 2.4 abgelegten Impulsantworten bzw. Übertragungsfunktionen die gemessenen Körperschallsignale erzeugt haben könnten.

Die zu berechnenden Drucksignale werden hierbei als lineare Überlagerung von zuvor heuristisch bestimmten Musterfunktionen 3.9 modelliert. Hierdurch wird eine Stabilisierung des Verfahrens und eine Reduzierung der zu berechnenden Parameter erzielt.

Abbildung 4 verdeutlicht die Motivation der Annahme einer zeit- bzw. winkelvarianten Übertragungsfunktion.

Während der Arbeitstakte bewegt sich der Kolben zyklisch zwischen dem oberen (OT) und dem unteren (UT) Totpunkt. Im OT ist die Zylindermantelfläche, die zur Körperschalleinkopplung zur Verfügung steht, minimal, während im UT ihr Maximalwert erreicht wird. Wenn sich der Kolben zu einem Zeitpunkt t an der Position Zk(alpha(t)) innerhalb des Zylinders befindet, steht als Einkoppelfläche der Bereich der permanenten Einkopplung sowie der Zylinderring der Breite zk(alpha(t)) - zk(0) zur Verfügung. Bei einer weiteren infinitesimalen Bewegung des Kolbens um dz vergrößert sich die Einkoppelfläche entsprechend. Dies bewirkt eine zusätzliche Zeit- bzw. Winkelabhängigkeit der Übertragungsfunktion.

Abb. 5 veranschaulicht diese Abhängigkeit. Abb. 5 zeigt eine Schätzung des Betragsquadrates der Übertragungsfunktion eines bestimmten Zylinders zu einem bestimmten Körperschallsensor. Auffallend ist dabei neben der Frequenzselektivität die starke Zeit- bzw. Winkelabhängigkeit, die erfindungsgemäß berücksichtigt wird.

## Patentansprüche

1. Verfahren zur Bewertung von Verbrennungsvorgängen an einer Brennkraftmaschine, wobei ein Modell zum Tragen kommt, welches für die relevanten niederfrequenten Schwingungen eine Übertragung zwischen Druck und Körperschall zugrunde legt, **dadurch gekennzeichnet, dass** eine zeitvariante Übertragung zwischen Druck und Körperschall angenommen wird, wobei durch Realisierung der Zeitabhängigkeit mittels einer winkelabhängigen Übertragungsfunktion Drehzahlunabhängigkeit erreicht wird, und dass für die Ermittlung verbrennungsrelevanter Parameter und Zustände nur einzelne Bestandteile des rekonstruierbaren Drucksignals verwendet werden.

2. Verfahren nach Anspruch 1 **dadurch gekennzeichnet, dass** die zeitvariante Übertragungsstrecke zwischen Druck und Körperschall aus der Beobachtung aller Zylinderdrücke und eines oder mehrerer Körperschallsignale identifiziert wird, wobei die Anordnung der Körperschallaufnehmer nach bekannten Regeln erfolgt.

3. Verfahren nach Anspruch 1 und 2 **dadurch gekennzeichnet, dass** auf der Grundlage der Kompressionskurve und der geschätzten Übertragungsfunktion zur direkten Ermittlung des Zeitverlaufs bzw. der Fourierkoeffizienten der kurbelwinkelbezogenen Verbrennungsüberhöhung eine nicht parametrische kleinste Quadrateschätzung zur Anwendung kommt.

4. Verfahren nach Anspruch 1 **dadurch gekennzeichnet, dass** zur Ermittlung der Kompressionskurve beispielsweise eine Mittelung über Drucksignale bei Schleppbetrieb erfolgt.

5. Verfahren nach Anspruch 1, 2 und 3 **dadurch gekennzeichnet, dass** für die Aussetzererkennung nur wenige oder nur ein Fourierkoeffizient der kurbelwinkelbezogenen Verbrennungsüberhöhung zur Anwendung kommt.

6. Verfahren nach Anspruch 1, 2 und 3 **dadurch gekennzeichnet, dass** die Detektion von Aussetzern auf der Basis eines approximativen F-Tests mit einer garantierten Detektionswahrscheinlichkeit erfolgt, dessen Falschalarrnwahrschein-lichkeit gleichmäßig über dem Signal-zu-Störanstand minimal in der Klasse der invarianten Tests für lineare Hypothesen ist.

7. Verfahren nach Anspruch 1 und 2 **dadurch gekennzeichnet, dass** auf der Grundlage der Kompressionskurve und der geschätzten Übertragungsfunktion zur direkten Ermittlung der Fourierkoeffizienten der kurbelwinkelbezogenen Verbrennungsüberhöhung eine parametrische Schätzung zur Anwendung kommt, die bereits im Winkelbereich arbeitet.

8. Anordnung zur Bewertung von Verbrennungsvorgängen an einer Brennkraftmaschine mit einem Modell, das für die relevanten niederfrequenten Schwingungen eine Übertragung zwischen Druck und Körperschall zugrunde legt, **dadurch gekennzeichnet, dass** das Modell eine zeitvariante Übertragung zwischen Druck und Körperschall zugrunde legt, wobei durch Realisierung der Zeitabhängigkeit mittels einer winkelabhängigen Übertragungsfunktion Drehzahlunabhängigkeit erreicht wird, und das Modell für die Ermittlung verbrennungsrelevanter Parameter und Zustände nur einzelne Bestandteile des rekonstruierbaren Drucksignals verwendet.

## Claims

1. Method for evaluating combustion processes in an internal combustion engine, wherein a model is applied which uses a transmission between pressure and solid-borne sound for the relevant low-frequency oscillations, **characterized in that** a transmission between pressure and solid-borne sound which is variable over time is assumed, wherein independence of the rotational speed is obtained by implementing the dependence on time by means of an angle-dependent transfer function, and **in that** only individual components of the reconstructable pressure signal are used for determining combustion-related parameters and states.

2. Method according to Claim 1, **characterized in that** the transmission link, which is variable over time, between pressure and solid-borne sound is identified from the observation of all the cylinder pressures and one or more solid-borne sound signals, wherein the solid-borne sound pickups are arranged according to known rules.

3. Method according to Claims 1 and 2, **characterized in that** a non-parametric, minimum square estimation is used, on the basis of the compression curve and the estimated transfer function to directly determine the time profile or the Fourier coefficients of the crank angle-related increase in combustion.

4. Method according to Claim 1, **characterized in that**, for example, averaging over pressure signals during overrun conditions is carried out in order to determine the compression curve.

5. Method according to Claims 1, 2 and 3, **characterized in that** only a small number of Fourier coefficients, or just one Fourier coefficient, of the crank angle-related increase in combustion is applied to detect misfires.

6. Method according to Claims 1, 2 and 3, **characterized in that** misfires are detected on the basis of an approximative F test with a guaranteed detection probability, the false alarm probability of which is minimal in the class of the invariant tests for linear hypotheses in a uniform way over the signal-to-noise ratio.

7. Method according to Claims 1 and 2, **characterized in that** a parametric estimation which is already operating in the angle domain is used on the basis of the compression curve and the estimated transfer function to directly determine the Fourier coefficients of the crank angle-related increase in combustion.

8. Arrangement for evaluating combustion processes in an internal combustion engine with a model which uses a transmission between pressure and solid-borne sound for the relevant low-frequency oscillations, **characterized in that** the model uses a transmission between pressure and solid-borne sound which is variable over time, wherein independence of the rotational speed is obtained by implementing the dependence on time by means of an angle-dependent transfer function, and the model uses only individual components of the reconstructable pressure signal for determining combustion-related parameters and states.

## Revendications

1. Procédé pour évaluer des opérations de combustion sur un moteur à combustion interne, selon lequel on utilise un modèle basé sur une transmission entre la pression et le bruit de structure pour les vibrations à basse fréquence appropriées,
**caractérisé en ce qu'**
on suppose une transmission variable dans le temps entre la pression et le bruit de structure, l'indépendance par rapport à la vitesse de rotation étant obtenue par la dépendance dans le temps à l'aide d'une fonction de transmission dépendante de l'angle, et
seuls sont utilisés certains composants du signal de pression reproductible afin de déterminer des paramètres et des états importants pour la combustion.

2. Procédé selon la revendication 1,
**caractérisé en ce que**
le trajet de transmission entre la pression et le bruit de structure variable dans le temps est identifié en observant toutes les pressions de cylindre et un ou plusieurs signaux de bruit de structure, les capteurs de bruit de structure étant disposés selon des règles connues.

3. Procédé selon la revendication 1 ou 2,
**caractérisé en ce qu'**
on utilise une estimation du carré minimale non paramétrique en se basant sur la courbe de compression et sur la fonction estimée de transmission afin de déterminer directement le tracé dans le temps ou le coefficient de Fourier du dépassement de combustion lié à l'angle de vilebrequin.

4. Procédé selon la revendication 1,
**caractérisé en ce que**
pour déterminer la courbe de compression on fait par exemple la moyenne des signaux de pression en fonctionnement de remorquage.

5. Procédé selon les revendications 1, 2 et 3,
**caractérisé en ce que**
pour reconnaître les ratés, on utilise peu ou uniquement un coefficient de Fourier du dépassement de combustion lié à l'angle de vilebrequin.

6. Procédé selon les revendications 1, 2 et 3,
**caractérisé en ce que**
les ratés sont détectés sur la base d'un test F approximatif dont la probabilité de détection est garantie et dont la probabilité de fausse alarme est régulièrement minimale sur l'état du signal par rapport aux parasites dans la classe des tests invariants pour des hypothèses linéaires.

7. Procédé selon les revendications 1 et 2,
**caractérisé en ce qu'**
on utilise une estimation paramétrique - qui fonctionne déjà dans la zone angulaire - en se basant sur la courbe de compression et sur la fonction estimée de transmission afin de déterminer directement les coefficients de Fourier du dépassement de combustion lié à l'angle de vilebrequin.

8. Système pour évaluer des opérations de combustion sur un moteur à combustion interne, dans lequel un modèle prend pour base une transmission entre la pression et le bruit de structure pour les vibrations à basse fréquence appropriées,
**caractérisé en ce que**
le modèle se fonde sur une transmission variable dans le temps entre la pression et le bruit de structure, l'indépendance par rapport à la vitesse de rotation étant obtenue par la dépendance dans le temps à l'aide d'une fonction de transmission dépendante de l'angle, et le modèle utilise seulement certains composants du signal de pression reproductible afin de déterminer des paramètres et des états importants pour la combustion
